# EUROPÄISCHE PATENTSCHRIFT

(11) **EP 2 219 500 B1**
(45) Veröffentlichungstag und Bekanntmachung des Hinweises auf die Patenterteilung: **15.05.2019**
(21) Anmeldenummer: 08856702.9
(22) Anmeldetag: 20.11.2008
(51) Int. Cl.: A47J 27/08, A47J 27/12

(54) **KOCHGESCHIRR**
COOKWARE
BATTERIE DE CUISINE

(30) Priorität: 06.12.2007 DE 102007058691
(43) Veröffentlichungstag der Anmeldung: 25.08.2010
(73) Patentinhaber: BSH Hausgeräte GmbH, 81739 München (DE)
(72) Erfinder: HAS, Uwe, 84579 Unterneukirchen (DE); ZIEGLER, Felicitas, 83371 Stein a.d. Traun (DE)
(86) Internationale Anmeldenummer: PCT/EP2008/065893
(87) Internationale Veröffentlichungsnummer: WO 2009/071446

(56) Entgegenhaltungen:
- EP-A- 1 762 164
- WO-A1-98/10686
- CN-Y- 2 803 190
- GB-A- 2 301 469
- US-A1- 2003 070 430
- US-B1- 7 168 363

## Beschreibung

Die Erfindung betrifft ein Kochgeschirr.

Bekannt ist ein Thermogenerator beispielsweise aus [http://en.wikipedia.org/wiki/Thermogenerator]. Bei einem Thermogenerator wird ein Temperaturunterschied unmittelbar in elektrische Energie umgewandelt. Allgemein verfügbare Thermogeneratoren liefern Ströme in einer Größenordnung von einigen 100mA bei Spannungen in einem Bereich von einigen Volt. Somit kann über einen Thermogenerator eine Leistung von einigen Watt bereitgestellt werden. Der Wirkungsgrad des Thermogenerators liegt in der Größenordnung von 5% bis 10%.

EP 1 762 164 A offenbart ein Grillgerät mit einem Thermogenerator als elektrischer Energiequelle zur Versorgung eines Akkumulators über eine Ladeeinheit.

GB 2 301 469 A offenbart ein Temperaturwarngerät für Speiseöl. Hierbei wird die Temperatur von erhitztem Speiseöl mittels eines thermisch gekoppelten Sensors bestimmt und von einer elektronischen Komponente mit Energieversorgung ausgewertet. Diese elektronische Komponente mit Energieversorgung ist örtlich entfernt von dem heißen Speiseöl angeordnet. Die Energieversorgung ist eine separate Energieversorgungseinheit, die möglichst weit entfernt von dem Speiseöl angeordnet werden soll.

US 7,168,363 B1 offenbart ein Grillgerät mit einem Thermogenerator.

US 2003/0070430 A1 offenbart ein modulares Wasserheizgerät. Dieses Wasserheizgerät kann verwendet werden, um in begrenztem Maße elektrische Energie mittels eines thermoelektrischen Moduls bereitzustellen.

CN 2803190 Y offenbart einen Topf mit einem hohlen Schalenteil, an dem außenseitig ein Griff ansetzt. In dem Griff ist eine elektronische Temperaturanzeige angeordnet. Die elektronische Temperaturanzeige ist mit einem elektronischen Thermometer verbunden, das bodenseitig in dem Hohlraum des Schalenteils angeordnet ist. Die elektronische Temperaturanzeige ist mit dem elektronischen Thermometer über Drähte verbunden. Dabei werden die Drähte hermetisch dicht durch Montagelöcher zwischen dem Schalenteil und dem Griff geführt. Zur Abdichtung wird hochtemperaturfester Klebstoff o.ä. verwendet. Dieser dient zur Temperaturisolierung und dazu, ein Einfließen von Wärmeleitöl in den Griff zu verhindern. Die elektronische Temperaturanzeige wird mittels einer im Griff untergebrachten Batterie gespeist. Die Batterie kann eine Temperaturdifferenzbatterie sein.

WO 98/10686 A1 offenbart ein Anzeigemittel zum Anzeigen von Zeit und Temperatur in einer Anzeigevorrichtung zum Zubereiten von warmen und kalten Speisen. Zur Stromversorgung des Anzeigemittels ist mindestens ein thermoelektrisches Element vorhanden. Das thermoelektrische Element kann einen Sensor aufweisen, der an einer Innenseite eines Deckels oder eines Gefäßes angeordnet ist, und zwar am Ort einer Temperaturmessung.

Die Aufgabe der Erfindung besteht darin, für Kochgeschirr aller Art eine einfache, autarke Versorgung mit ausreichender elektrischer Energie zu schaffen, die besonders einfache montierbar ist und bei ausreichender thermischer Energiezufuhr eine besonders zuverlässig arbeitende Anordnung des Thermogenerators ermöglicht.

Diese Aufgabe wird gemäß den Merkmalen des unabhängigen Patentanspruchs gelöst. Weiterbildungen der Erfindung ergeben sich auch aus den abhängigen Ansprüchen.

Die Aufgabe wird gelöst durch ein Kochgeschirr mit einem an seiner Seitenwand angebrachten Griff und mit einem Thermogenerator, der einen elektrischen Verbraucher versorgt, wobei der Thermogenerator zwischen dem Griff und der Seitenwand angeordnet ist.

Bei Kochgeschirr handelt es sich insbesondere um jede Art von Geschirr, das zum Erwärmen von Speisen einsetzbar ist.

Vorteilhaft übernimmt das Kochgeschirr die elektrische Energieversorgung seines Verbrauchers selbst. Eine separate Kabelführung zu dem Kochgeschirr ist somit nicht nötig und wäre bei bspw. auf Kochherden eingesetztem Geschirr auch eher hinderlich. Vorteilhafterweise ermöglicht das Kochgeschirr auch eine besonders einfache montierbare, für einen Nutzer verdeckte und zudem gegenüber Gargut und anderen äußeren Einflüssen wie Reinigungsmittel geschützte Anordnung des Thermogenerators. Darüber hinaus ergibt sich während des Kochvorgangs ein im wesentlichen stabiler Temperaturunterschied, was beispielsweise bei einer Anordnung an einem unteren Bereich des Kochgeschirrs, z.B. an einem Boden, nicht der Fall ist. Dies wiederum verringert thermische Wechsellasten, was zu eine besonders hohen Langlebigkeit beiträgt. Außerdem lässt sich so bei ausreichender thermischer Energiezufuhr eine Anbindung des Thermogenerators an davon betriebene elektrische Verbraucher besonders einfach umsetzen. Bei Bedarf kann diese elektrische

Eine nächste Weiterbildung besteht darin, dass der elektrische Verbraucher in dem Griff des Kochgeschirrs angeordnet ist.

Eine alternative Ausführungsform besteht darin, dass der elektrische Verbraucher in dem Deckel des Kochgeschirrs angeordnet ist.

Eine nächste Ausgestaltung ist es, dass mehrere Thermogeneratoren vorgesehen sind.

Insbesondere können mehrere Thermogeneratoren in dem Kochgeschirr angeordnet und miteinander in Reihe geschaltet sein, um somit eine höhere Spannung bereitzustellen.

Auch ist es eine Ausgestaltung, dass ein Spannungswandler zur Erhöhung einer Ausgangsspannung des Thermogenerators vorgesehen ist.

Eine Weiterbildung besteht darin, dass ein Energiespeicher zur Versorgung des elektrischen Verbrauchers vorgesehen ist.

Ein solcher Energiespeicher kann als ein Kondensator oder als ein Akkumulator ausgeführt sein.

Eine zusätzliche Ausgestaltung ist es, dass das Kochgeschirr ein Frittiertopf oder ein Dampfdruckkochtopf ist.

Ausführungsbeispiele der Erfindung werden nachfolgend anhand der Zeichnungen dargestellt und erläutert.

Es zeigen:
- Fig.1: Beispiele für Kochgeschirre, die jeweils mit mindestens einem Thermogenerator ausgerüstet werden können;
- Fig.2: verschiedene Möglichkeiten für einen Einbau eines Thermogenerators in einer Pfanne;
- Fig.3: eine Pfanne mit einem Thermogenerator, einer Anzeigeeinheit, einem Datentransmitter und zugehöriger Elektronik.

Es wird vorgeschlagen, an einem Kochgeschirr mindestens einen Thermogenerator anzubringen, welcher bei Betrieb des Kochgeschirres ein vorhandenes Temperaturgefälle in eine elektrische Spannung umsetzt.

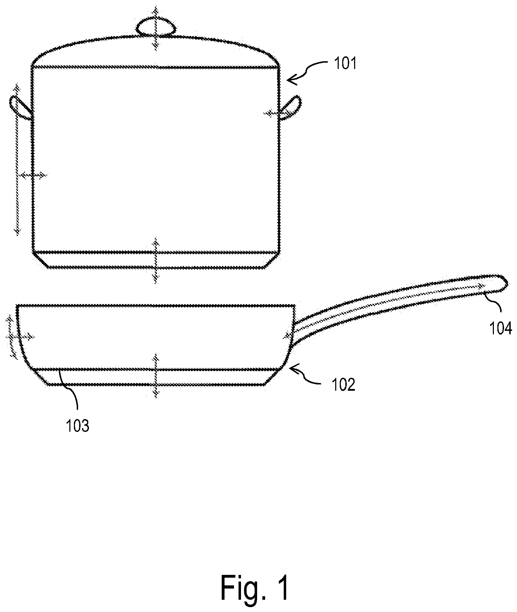

**Fig.1** zeigt zwei mögliche Varianten für Kochgeschirr, einen Topf 101 und eine Pfanne 102, die jeweils an unterschiedlichen Stellen mit mindestens einem Thermogenerator ausgerüstet werden können.

In Fig.1 sind die Temperaturdifferenzen an unterschiedlichen Stellen des Topfs 101 und der Pfanne 102 dargestellt: Ein langer Doppelpfeil entspricht hierbei einem größeren Temperaturgefälle als ein kurzer Doppelpfeil.

Insbesondere ist hierbei zu beachten, dass der Temperaturgradient auch von einem Füllstand in dem Kochgeschirr abhängt.

Durch die Wand des Kochgeschirrs 101 und 102 herrscht auch ein Temperaturgradient von einigen Grad vor, beim Kochen beispielsweise liegt dieser Temperaturgradient in einer Größenordnung von ca. 3K. Auch wenn dieser Temperaturgradient durch die Wand des Kochgeschirrs recht stabil ist, ist dessen absoluter Wert vergleichsweise niedrig.

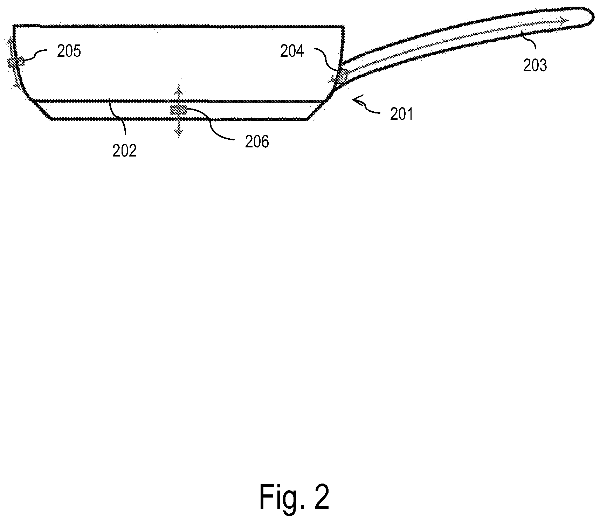

**Fig.2** zeigt eine Pfanne 201 mit einem Thermogenerator 204 in einem Grenzbereich zwischen einer Seitenwand und einem Griff 203 der Pfanne 201.

Zusätzlich zu dem Thermogenerator 204 könnte ein Thermogenerator 205 an, entlang oder in der Wand der Pfanne 201 und/oder ein Thermogenerator 206 in dem Boden 202 der Pfanne 201 vorgesehen sein.

Zur bestmöglichen Ausbeute der jeweils von dem Thermogenerator 204 bis 206 bereitgestellten elektrischen Energie ist dieser vorzugsweise an einem Ort ausreichend hoher Temperaturdifferenz angeordnet. Dabei sollten möglichst keine thermischen Nebenschlüsse vorliegen, anhand derer die Wärme um den Thermogenerator herum ("diesem ausweichen") kann, wenn die Temperaturdifferenz groß wird.

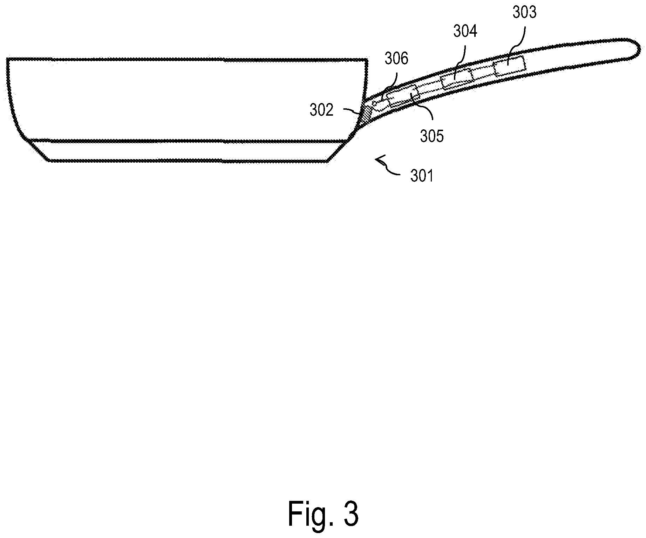

In **Fig.3** ist eine Pfanne 301 dargestellt, die einen Thermogenerator 302 aufweist, der eine Elektronik 303 sowie eine an diese angeschlossene Anzeigeeinheit mit Bedieneinheit 305 und eine Datenübermittlungseinheit 304 mit elektrischer Energie versorgt. Weiterhin ist ein Messfühler oder (Temperatur-)Sensor 306 vorgesehen anhand dessen ein Signal an die Elektronik 303 geliefert wird, das beispielsweise auf der Bedien- und Anzeigeeinheit 305 dargestellt werden kann. Ferner kann der so ermittelte Temperaturwert auch über die Datenübermittlungseinheit 304 an ein weiteres Gerät mittels einer Funkschnittstelle oder einer IR-Schnittstelle gesendet werden. Der Empfänger kann ein anderes Geschirr, ein Küchenherd oder ein sonstiger (zentraler) Empfänger sein.

Die Bedien- und Anzeigeeinheit 305, die Datenübermittlungseinheit 304 sowie die Elektronik 303 sind vorzugsweise in dem Griff der Pfanne 301 angeordnet.

Es können mittels der Datenübertragungseinheit 304 eine Vielzahl unterschiedlicher Daten, z.B. Messwerte (z.B. Temperatur) oder Einstellungen, über unterschiedliche Übertragungskanäle, z.B. über eine Funkstrecke oder über eine Infrarotverbindung, übertragen werden. Entsprechend können Daten von der Pfanne 301 mittels der Datenübertragungseinheit 304 (die vorzugsweise einen Transceiver umfasst) empfangen werden. Beispiele für solche empfangenen Daten sind Rezeptvorgaben oder Messwerte von einem Küchenherd (z.B. Temperaturwert aus der Mulde eines Gasherds). Die empfangenen oder gemessenen Daten können mittels der Bedien- und Anzeigeeinheit 305 dem Benutzer (z.B. einem Koch) zur Information dargestellt oder (unmittelbar) zur Regelung eingesetzt werden.

Zwei weitere Beispiele für Kochgeschirr gemäß dem vorliegenden Ansatz sind ein Frittiertopf und ein Dampfdruckkochtopf. Beide Kochgeschirre haben den Vorteil, dass in einem Arbeitspunkt stabile Temperaturverhältnisse im Kochgeschirr vorherrschen und bereits vor dem Erreichen des Arbeitspunktes in dem Kochgeschirr ein ausreichend hohes Temperaturniveau für die Energieerzeugung mittels Thermogenerator vorliegt. Darüber hinaus sind die Einsatzgebiete des Frittiertopfes sowie des Dampfdruckkochtopfes besonders geeignet, mittels Bedieneinheiten, Anzeigeeinheiten, Sensoren, Alarmeinrichtungen (z.B. Timer, Wecker) und/oder Transceiver für Daten deren Leistungsfähigkeit und Kundenattraktivität sowie insbesondere deren Bedienbarkeit zu verbessern.

Um die Höhe der Ausgangsspannung des Thermogenerators von ca. 5 Volt auf 10 Volt bis 20 Volt zu erhöhen, kann ein Spannungswandler (DC/DC-Wandler) oder Hochsetzer verwendet werden.

Wie erläutert wurde, erzeugt der Thermogenerator aus einem Temperaturgefälle elektrische Energie, wenn ein hinreichend starkes Temperaturgefälle vorhanden ist. Dies ist jedoch unmittelbar nach dem Entzünden einer Gasflamme bzw. unmittelbar nach dem Aufsetzen des Kochgeschirres auf die Kochstelle bei noch kaltem Herd nicht gegeben. Daher kann in dem Kochgeschirr ein kleiner Energiespeicher (z.B. ein Kondensator oder ein Akkumulator) vorgesehen sein, der insbesondere von einem vorhergehenden Kochprozess Energie speichert und diese später, insbesondere während der Aufheizphase des aktuellen Kochprozesses, bereitstellt.

Hierbei reicht vorteilhaft eine geringe Menge an elektrischer Energie aus, weil unmittelbar nach dem Einschalten des Herds (und somit bei noch kaltem Kochgeschirr) noch kein besonderer Bedarf an Regelungsaktionen mittels der von dem Thermogenerator zur Verfügung gestellten elektrischen Energie besteht.

Die vom Thermogenerator abgegebene Spannung hängt direkt von der Temperaturdifferenz ab. Da die Temperatur der kalten Seite (mehr oder weniger) stabil ist, kann die vom Thermogenerator abgegebene Spannung als Sensorsignal für die Temperatur der heißen Seite betrachtet werden.

## Patentansprüche

1. Kochgeschirr (201, 301) mit einem an seiner Seitenwand angebrachten Griff und mit einem Thermogenerator (204, 302), der einen elektrischen Verbraucher (303, 304, 305) versorgt, **dadurch gekennzeichnet, dass** der Thermogenerator (204, 302) zwischen dem Griff und der Seitenwand angeordnet ist.

2. Kochgeschirr nach Anspruch 1, **dadurch gekennzeichnet, dass** der elektrische Verbraucher eine Anzeigeeinheit (305) umfasst.

3. Kochgeschirr nach einem der vorhergehenden Ansprüche, **dadurch gekennzeichnet, dass** der elektrische Verbraucher eine Elektronik (303) umfasst.

4. Kochgeschirr nach einem Anspruch 3, **dadurch gekennzeichnet, dass** die Elektronik (303) mit mindestens einem Bedienelement (305) verbunden ist.

5. Kochgeschirr nach einem der Ansprüche 3 oder 4, **dadurch gekennzeichnet, dass** die Elektronik (303) mit mindestens einem Sensor (306) verbunden ist.

6. Kochgeschirr nach einem der Ansprüche 3 bis 5, **dadurch gekennzeichnet, dass** die Elektronik (303) eine Steuerung und/oder eine Regelung umfasst.

7. Kochgeschirr nach einem der Ansprüche 3 bis 6, **dadurch gekennzeichnet, dass** ein Datentransmitter (304) vorgesehen ist, der mit der Elektronik (303) verbunden ist.

8. Kochgeschirr nach einem der vorhergehenden Ansprüche, **dadurch gekennzeichnet, dass** der Thermogenerator (204, 302) derart an dem Kochgeschirr (201, 301) angeordnet ist, dass entlang des Thermogenerators (204 , 302) ein hoher Temperaturunterschied besteht.

9. Kochgeschirr nach einem der vorhergehenden Ansprüche, **dadurch gekennzeichnet, dass** der elektrische Verbraucher (303, 304, 305) in dem Griff des Kochgeschirrs (201, 301) angeordnet ist.

10. Kochgeschirr nach einem der vorhergehenden Ansprüche, **dadurch gekennzeichnet, dass** ein Spannungswandler zur Erhöhung einer Ausgangsspannung des Thermogenerators vorgesehen ist.

11. Kochgeschirr nach einem der vorhergehenden Ansprüche, **dadurch gekennzeichnet, dass** ein Energiespeicher zur Versorgung des elektrischen Verbrauchers vorgesehen ist.

12. Kochgeschirr nach einem der vorhergehenden Ansprüche, **dadurch gekennzeichnet, dass** das Kochgeschirr ein Frittiertopf oder ein Dampfdruckkochtopf ist.

## Claims

1. Cookware (201, 301) having a handle attached to its side wall and having a thermogenerator (204, 302) which supplies power to an electrical consumer load (303, 304, 305), **characterised in that** the thermogenerator (204, 302) is arranged between the handle and the side wall.

2. Cookware according to claim 1, **characterised in that** the electrical consumer load comprises a display unit (305).

3. Cookware according to one of the preceding claims, **characterised in that** the electrical consumer load comprises an electronics assembly (303).

4. Cookware according to claim 3, **characterised in that** the electronics assembly (303) is connected to at least one control element (305).

5. Cookware according to one of claims 3 or 4, **characterised in that** the electronics assembly (303) is connected to at least one sensor (306).

6. Cookware according to one of claims 3 to 5, **characterised in that** the electronics assembly (303) comprises a controller and/or a regulator.

7. Cookware according to one of claims 3 to 6, **characterised in that** a data transmitter (304) is provided, which is connected to the electronics assembly (303).

8. Cookware according to one of the preceding claims, **characterised in that** the thermogenerator (204, 302) is arranged on the cookware (201, 301) such that a large temperature difference exists along the thermogenerator (204, 302).

9. Cookware according to one of the preceding claims, **characterised in that** the electrical consumer load (303, 304, 305) is arranged in the handle of the cookware (201, 301).

10. Cookware according to one of the preceding claims, **characterised in that** a voltage transformer is provided for increasing an output voltage of the thermogenerator.

11. Cookware according to one of the preceding claims, **characterised in that** an energy store is provided for supplying power to the electrical consumer load.

12. Cookware according to one of the preceding claims, **characterised in that** the cookware is a fryer or a pressure cooker.

## Revendications

1. Ustensile de cuisson (201, 301) avec une poignée située sur son côté latéral et avec un thermogénérateur (204, 302), lequel alimente un dissipateur électrique (303, 304, 305), **caractérisé en ce que** ce thermogénérateur (204, 302) est situé entre la poignée et le côté latéral.

2. Ustensile de cuisson selon la revendication 1, **caractérisé en ce que** le dissipateur électrique comprend une unité d'affichage (305).

3. Ustensile de cuisson selon l'une des revendications précédentes, **caractérisé en ce que** le dissipateur électrique comprend un équipement électronique (303).

4. Ustensile de cuisson selon la revendication 3, **caractérisé en ce que** cet équipement électronique (303) est raccordé à au moins un élément de commande (305).

5. Ustensile de cuisson selon l'une des revendications 3 ou 4, **caractérisé en ce que** l'équipement électronique (303) est raccordé à au moins un capteur (306).

6. Ustensile de cuisson selon l'une des revendications 3 à 5, **caractérisé en ce que** l'équipement électronique (303) comprend une commande et/ou un réglage.

7. Ustensile de cuisson selon l'une des revendications 3 à 6, **caractérisé en ce qu'**un transmetteur de données (304) raccordé à cet équipement électronique (303) est prévu.

8. Ustensile de cuisson selon l'une des revendications précédentes, **caractérisé en ce que** le thermogénérateur (204, 302) est disposé sur l'ustensile de cuisson (201, 301) de telle sorte qu'il y a le long du thermogénérateur (204, 302) une grande différence de température.

9. Ustensile de cuisson selon l'une des revendications précédentes, **caractérisé en ce que** le dissipateur électrique (303, 304, 305) est situé dans la poignée de l'ustensile de cuisson (201, 301).

10. Ustensile de cuisson selon l'une des revendications précédentes, **caractérisé en ce qu'**un transformateur de tension est prévu pour augmenter la tension de sortie du thermogénérateur.

11. Ustensile de cuisson selon l'une des revendications précédentes, **caractérisé en ce qu'**un accumulateur d'énergie est prévu pour alimenter le dissipateur électrique.

12. Ustensile de cuisson selon l'une des revendications précédentes, **caractérisé en ce que** cet ustensile de cuisson est une friteuse ou une casserole à pression.
